# EUROPÄISCHE PATENTSCHRIFT

(11) **EP 1 419 872 B1**
(45) Veröffentlichungstag und Bekanntmachung des Hinweises auf die Patenterteilung: **29.03.2006**
(21) Anmeldenummer: 03292601.6
(22) Anmeldetag: 17.10.2003
(51) Int. Cl.: B29C 47/84

(54) **Verfahren zur Extrusion eines Gemisches**
Method for extruding a mixture
Procédé d'extrusion d'un mélange

(30) Priorität: 14.11.2002 DE 10252976
(43) Veröffentlichungstag der Anmeldung: 19.05.2004
(73) Patentinhaber: Nexans, 75008 Paris (FR)
(72) Erfinder: Dänekas, Franz, 30826 Garbsen (DE); Köhler, Dirk, 31234 Edemissen (DE)
(74) Vertreter: Döring, Roger

(56) Entgegenhaltungen:
- DE-B- 2 754 877
- GB-A- 1 145 800
- US-A- 3 805 888
- US-A1- 2002 050 389
- PATENT ABSTRACTS OF JAPAN vol. 011, no. 010 (M-552), 10. Januar 1987 (1987-01-10) & JP 61 188125 A (TOSHIBA MACH CO LTD), 21. August 1986 (1986-08-21)

## Beschreibung

Die Erfindung betrifft ein Verfahren zur Extrusion eines Gemisches aus einem ersten und einem zweiten Thermoplasten nach dem Oberbegriff des Anspruchs 1.

Aus der EP-A-1 148 518 ist ein Verfahren zur Herstellung von mit vernetztem Polyethylen überzogenen Leitungsdrähten bekannt, bei dem ein Gemisch aus Granulat, Gries oder Pulver aus einem Polyethylen Homopolymer und einem Polyethylen Copolymer mit einem flüssigen Vernetzungsmittel überzogen wird, das überzogene Granulat, Gries oder Pulver in einem Extruder aufgeschmolzen und auf den Leitungsdraht extrudiert und die extrudierte Schicht durch Erwärmen auf eine Temperatur oberhalb der Zersetzungstemperatur des Vernetzungsmittels vernetzt wird.

Aus der GB-A-2 166 079 ist ein Verfahren zur Extrusion von thermoplastisch verarbeitbaren, polymeren Kunststoffen bekannt. Die Funktion eines Extruders besteht darin, das thermoplastische Material zu schmelzen und zu homogenisieren und dieses unter Druck mit gleichmäßiger Rate einem Extrusionsmundstück zuzuführen, mit welchem die thermoplastische Schmelze in die gewünschte Form gebracht wird. Bei dem Extrusionsverfahren wird Pulver, Granulat oder Pellets des thermoplastischen Kunststoffs in den Einflußbereich einer Extruderschnecke eingegeben, welche innerhalb eines beheizten Extrudergehäuses rotiert. Das thermoplastische Material wird durch die Rotation der Extruderschnecke innerhalb des Extrudergehäuses in Richtung auf das Extrusionsmundstück transportiert und wird dabei geschmolzen und homogenisiert. Das Schmelzen und Homogenisieren erfolgt dabei durch Zufuhr von Wärme, die zum einen durch die Scherkräfte entsteht zum anderen durch die Beheizung des Extrudergehäuses von außen in das Innere des Extruders eingebracht wird.

Der Austrag eines Extruders ist unter anderem abhängig von den geometrischen Abmessungen der Extruderschnecke und des Extrudergehäuses, der Rotationsgeschwindigkeit der Extruderschnecke, den Eigenschaften des thermoplastischen Kunststoffs, den geometrischen Abmessungen der Austragszone und des Extrusionsmundstücks und vom aufgebrachten Druck im Bereich der Austragszone.

Um die Leistung eines Extruders mit einer Extruderschnecke zu erhöhen, wird in der GB-A-2 166 079 vorgeschlagen, die Extruderschnecke mit einer Bohrung zu versehen und in die Bohrung ein elektrisches Heizelement einzusetzen, um den Schmelzbereich der Extruderschnecke von innen aufzuheizen.

Aus der US 2002/0050389 A1 ist die Extrusion eines Gemisches aus zwei Thermoplasten, deren Schmelzbereiche unterschiedlich hoch sind, bekannt. Hier treten dadurch Probleme auf, daß im Einzugsbereich der Extruderschnecke das Granulat, Pulver oder die Pellets an der Oberfläche der Schnecke anhaften, wenn diese beheizt ist und dadurch eine stabile Förderung des Granulats des Pulvers und der Pellets nicht mehr gewährleistet ist. Andererseits wird die Schnecke durch die Beheizung von außen insbesondere jedoch durch die Scherkräfte im Bereich der Austragszone auf eine Temperatur erhöht, bei welcher einige Zusätze, die zugegeben werden, um die Eigenschaften des Kunststoffs zu verbessern, bereits zu reagieren beginnen, was unter Umständen unerwünscht ist.

Die US-A-3 805 888 offenbart einen Extruder mit einer Extruderschnecke, welche eine Bohrung aufweist, in welche ein Wärmetauschermedium einleitbar ist, welche eine unterschiedliche Erwärmung der Extruderschnecke in deren Längsrichtung bewirkt.

Der Erfindung liegt die Aufgabe zugrunde, das eingangs erwähnte Verfahren dahingehend zu verbessern, daß ein Ankleben des Granulats des Pulvers bzw. des Grieses im Einzugsbereich der Extruderschnecke verhindert wird, sowie die Temperatur der Schmelze so zu steuern, daß im Austragsbereich ein Beginn der Reaktion von Zusätzen, insbesondere von Peroxiden vermieden wird.

Diese Aufgabe wird dadurch gelöst, daß die Extruderschnecke eine sich von der Einzugszone bis zur Austragszone erstreckende Bohrung aufweist, in welche ein Temperiermedium einleitbar ist, welches eine Erwärmung der Extruderschnecke im Einzugbereich auf eine Temperatur unterhalb des Schmelzbereiches des Thermoplasten mit dem niedrigeren Schmelzbereich sowie eine Temperierung der Schnecke in der Austragszone auf eine Temperatur bewirkt, welche zwischen dem Schmelzbereich des ersten und des zweiten Thermoplasten liegt.

Neben den sich aus der Aufgabenstellung direkt ergebenden Vorteilen wird durch die Erfindung noch erreicht, daß eine hohe Verarbeitungssicherheit sowie eine hohe Fertigungsgeschwindigkeit erzielt wird.

Weitere vorteilhafte Ausgestaltungen der Erfindung sind in den Unteransprüchen erfaßt.

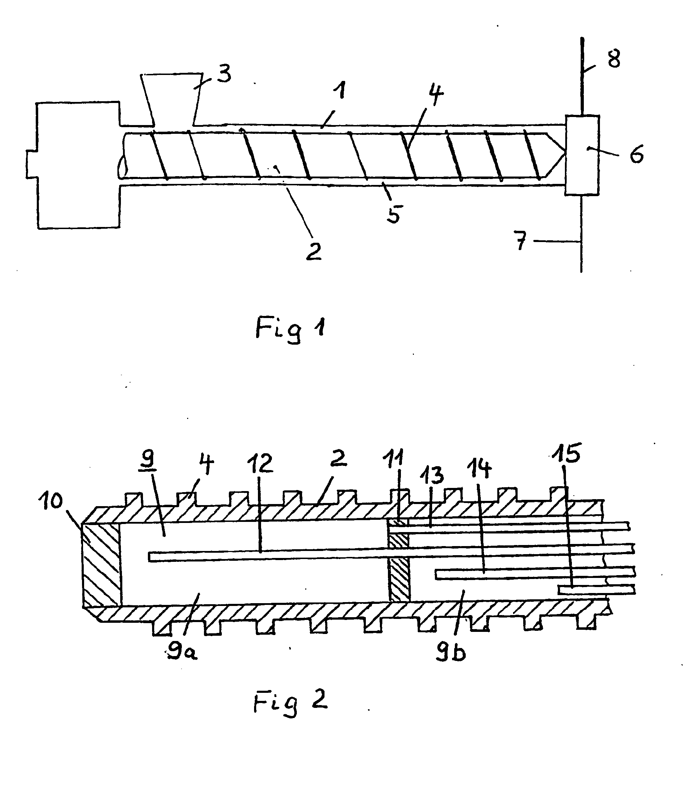

Die Erfindung wird anhand der in den Figuren 1 und 2 schematisch dargestellten Ausführungsbeispiele näher erläutert.

In Figur 1 ist eine seitliche Ansicht eines Extruders im Schnitt dargestellt.

Der Extruder weist ein Extrudergehäuse 1 auf, in welchem eine Schnecke 2 drehantreibbar gelagert ist. Der Extruder ist mit einer nicht dargestellten Zusatzheizung versehen, welche im Extrudergehäuse untergebracht ist. Ein Trichter 3 dient zum Einfüllen des Granulates, Grieses oder der Pellets aus dem zu verarbeitenden Thermoplasten. Das in den Trichter 3 eingebrachte Material wird von den Schneckengängen 4 in dem Spalt 5 zwischen dem Extrudergehäuse 1 und der Extruderschnecke 2 weitertronsportiert - in der Figur - nach rechts -, wobei es aufgeschmolzen und homogenisiert wird. Am Austrittsende des Extruders ist ein Querspritzkopf 6 vorgesehen, mit dessen Hilfe auf einen elektrischen Leiter 7 eine Kunststoffschicht 8 aufgebracht wird.

In der Figur 2 ist ein Schnitt durch die Extruderschnecke 2 dargestellt. Die Extruderschnecke 2 weist einen Hohlraum bzw, eine Bohrung 9 auf, die an einem Ende 10 geschlossen ist. Durch eine Trennwand 11 ist die Bohrung 9 in zwei Bereiche 9a und 9b getrennt. Ein Leitungsrohr 12 ist flüssigkeitsdicht durch die Trennwand 11 hindurchgeführt und endet vor dem Ende 10 der Bohrung 9. Ein zweites Leitungsrohr 13 ist ebenfalls durch die Trennwand 11 flüssigkeitsdicht hindurchgeführt.

Von dem dem Ende 10 entgegengesetzten Ende der Schnecke 2 sind zwei weitere Leitungsrohre 14 und 75 in den Bereich 9b der Bohrung 9 hineingeführt, von denen das Leitungsrohr 14 länger ist als das Leitungsrohr 7 5.

Von einem nicht dargestellten Temperiergerät wird durch das Leitungsrohr 12 ein Temperiermedium - normalerweise Wasser - in den Bereich 9a eingebracht, welches dort für eine gleichmäßige Temperatur an der Oberfläche der Schnecke 2 sorgt.

Das Leitungsrohr 13 führt das Temperiermedium zum Temperiergerät zurück.

Das Leitungsrohr 14 ist ebenfalls an ein nicht dargestelltes Temperiergerät angeschlossen und leitet ebenfalls ein Temperiermedium - normalerweise Wasser - in den Bereich 9b hinein. Das Leitungsrohr 15 führt das Temperiermedium zurück zum Temperiergerät.

Durch die Temperiermedien wird die Oberfläche der Extruderschnecke 2 unterschiedlich temperiert und zwar ist die Oberflächentemperatur im Bereich 9a wesentlich höher als im Bereich 9b.

Anhand eines Ausführungsbeispiels soll die Wirkungsweise des Extruders bzw. der Schnecke verdeutlich werden. Zur Herstellung der Isolierung eines elektrischen Leiters wird ein Gemisch aus 80 Teilen LDPE mit einer Dichte von ca. 0,92 g/ccm als Granulat und 20 Teilen Polyethylen Copolymer, z. B. Ethylen-Butyl-Acrylat als Granulat zusammen mit 2 Teilen Dicumylperoxid oder Tert. Butylcumylperoxid und 0,2 Teilen Stabilisator gemischt und in den Trichter 3 des Extruders eingegeben. Das Gemisch kann vor dem Einbringen auf eine Temperatur von 40 - 60 °C vorgewärmt werden.

Die Oberflächentemperatur der Schnecke 2 im Bereich 9b wird auf eine Temperatur von ca. 50 °C eingestellt.

Durch die Zufuhr von Wärme über die Innenwand des beheizten Extrudergehäuses 1 sowie durch die bei der Rotation der Schnecke 2 auftretenden Scherkräfte wird das Granulat allmählich geschmolzen und homogenisiert. Um eine Überhitzung der Schmelze zu vermeiden und eine Reaktion des Peroxids zu verhindern wird die Oberflächentemperatur der Schnecke 2 im Bereich 9a (Austragszone) auf eine Temperatur eingestellt, welche zwischen dem Schmelzbereich des Polyethylen Copolymers und dem LDPE gelegen ist. Sie liegt in etwa zwischen 95 und 105 °C.

Die am Ende des Extruders in den Querspritzkopf 6 eingeleitete Schmelze hat eine Temperatur von in etwa 120 °C.

Der mit der lsolierschicht 8 versehene elektrische Leiter 7 wird anschließend in ein sogenanntes CV-Rohr eingebracht, wo bei einer Temperatur oberhalb der Zersetzungstemperatur des Peroxids die Vernetzung der Isolierschicht 8 durchgeführt wird.

## Patentansprüche

1. Verfahren zur Extrusion eines Thermoplasten mit einem Extruder, der ein beheizbares Gehäuse (1) sowie eine Schnecke (2) aufweist, welche eine Einzugszone, eine Schmelzzone, eine Austragszone sowie eine sich von der Einzugszone bis zur Austragszone erstreckende Bohrung (9) aufweist, in welche ein Temperiermedium einleitbar ist, **gekennzeichnet durch** folgende Merkmäle:
a) der zu extrudierende Thermoplast ist ein Gemisch aus einem Granulat, Gries oder Pulver eines ersten Thermoplasten und eines zweiten Thermoplasten, wobei der Schmelzbereich des ersten Thermoplasten vom Schmelzbereich des zweiten Thermoplasten abweicht,
b) das Temperiermedium bewirkt eine Erwärmung der Schnecke (2) in der Einzugszone auf eine Temperatur unterhalb des Schmelzbereiches des Thermoplasten mit dem niedrigen Schmelzbereich und
c) das Temperiermedium bewirkt eine Temperierung der Schnecke (2) in der Austragszone (9a), welche zwischen dem Schmelzbereich des ersten und des zweiten Thermoplasten liegt.

2. Verfahren nach Anspruch 1, **dadurch gekennzeichnet, daß** der erste Thermoplast ein Polyethylen Homopolymer und der zweite Thermoplast ein Copolymer des Ethylens ist.

3. Verfahren nach Anspruch 1 oder 2, **dadurch gekennzeichnet, daß** die Schnecke (2) in der Einzugszone auf eine Temperatur zwischen 20 und 60 °C erwärmt wird.

4. Verfahren nach einem der Ansprüche 1 bis 3, **dadurch gekennzeichnet, daß** die Schnecke (2) im Bereich der Austragszone (9a) auf einer Temperatur von 95 bis 110 °C gehalten wird.

5. Verfahren nach einem der Ansprüche 1 bis 4, **dadurch gekennzeichnet, daß** eine Mischung aus 70 - 90 Gew.% Polyethylen Homopolymer und 30 - 10 Gew.% Copolymer des Ethylens im Extruder gemischt, geschmolzen und extrudiert wird.

6. Verfahren nach einem der Ansprüche 1 bis 5, **dadurch gekennzeichnet, daß** ein Copolymer des Ethylens verwendet wird, dessen Comonomeranteil zwischen 8 und 35 % liegt.

7. Verfahren nach einem der Ansprüche 1 bis 6, **dadurch gekennzeichnet, daß** als Copolymer des Ethylens ein Ethylen-Butyl-Acrylat, ein Ethylen-Ethyl-Acrylat oder ein Ethylen-Methyl-Acrylat jeweils mit einem Acrylatmonomergehalt von 8 bis 35 Gew.% eingesetzt wird.

8. Verfahren nach einem der Ansprüche 1 bis 7, **dadurch gekennzeichnet, daß** beide Thermoplaste in Granulatform in den Extruder eingegeben werden.

9. Verfahren nach einem der Ansprüche 1 bis 8, **dadurch gekennzeichnet, daß** die Bohrung (9) der Schnecke (2) in zwei Kammern (9a,9b) getrennt ist, wobei sich die erste Kammer (9b) von der Einzugszone bis zum ersten Drittel der Schmelzzone und die zweite Kammer (9a) sich bis in die Austragszone erstreckt.

10. Verfahren nach einem der Ansprüche 1 bis 9, **dadurch gekennzeichnet, daß** das Temperiermedium für die erste Kammer (9b) in einem ersten Temperiergerät und das Temperiermedium für die zweite Kammer (9a) in einem zweiten Temperiergerät auf eine vorgebbare Temperatur temperiert werden.

11. Verfahren nach einem der Ansprüche 1 bis 10, **dadurch gekennzeichnet, daß** die Polymermischung einen Peroxidanteil von 1 bis 3 Gew% enthält.

## Claims

1. Method for extruding a thermoplastic with an extruder, which has a heatable housing (1) and a screw (2), which has a feed zone, a melt zone, a metering zone and a bore (9) extending from the feed zone to the metering zone, into which bore a temperature control medium can be introduced, **characterized by** the following features:
a) the thermoplastic to be extruded is a mixture of granules, grit or powder of a first thermoplastic and of a second thermoplastic, the melting range of the first thermoplastic differing from the melting range of the second thermoplastic,
b) the temperature control medium brings about heating of the screw (2) in the feed zone to a temperature below the melting range of the thermoplastic with the lower melting range and
c) the temperature control medium controls the temperature of the screw (2) in the metering zone (9a) to a temperature which lies between the melting range of the first thermoplastic and that of the second thermoplastic.

2. Method according to Claim 1, **characterized in that** the first thermoplastic is a polyethylene homopolymer and the second thermoplastic is a copolymer of ethylene.

3. Method according to Claim 1 or 2, **characterized in that** the screw (2) is heated in the feed zone to a temperature between 20 and 60°C.

4. Method according to one of Claims 1 to 3, **characterized in that** the screw (2) is kept to a temperature of from 95 to 110°C in the region of the metering zone (9a).

5. Method according to one of Claims 1 to 4, **characterized in that** a mixture of 70-90% by weight of polyethylene homopolymer and 30-10% by weight of copolymer of ethylene is mixed in the extruder, melted and extruded.

6. Method according to one of Claims 1 to 5, **characterized in that** a copolymer of ethylene of which the comonomer fraction lies between 8 and 35% is used.

7. Method according to one of Claims 1 to 6, **characterized in that** an ethylene-butyl acrylate, an ethylene-ethyl acrylate or an ethylene-methyl acrylate is used as the copolymer of ethylene, in each case used with an acrylate monomer content of from 8 to 35% by weight.

8. Method according to one of Claims 1 to 7, **characterized in that** both thermoplastics are introduced into the extruder in the form of granules.

9. Method according to one of Claims 1 to 8, **characterized in that** the bore (9) of the screw (2) is divided into two chambers (9a, 9b), the first chamber (9b) extending from the feed zone to the first third of the melt zone and the second chamber (9a) extending into the metering zone.

10. Method according to one of Claims 1 to 9, **characterized in that** the temperature control medium for the first chamber (9b) is controlled to a predeterminable temperature in a first temperature control unit and the temperature control medium for the second chamber (9a) is controlled to a predeterminable temperature in a second temperature control unit.

11. Method according to one of Claims 1 to 10, **characterized in that** the polymer mixture contains a peroxide fraction of from 1 to 3% by weight.

## Revendications

1. Procédé d'extrusion d'un thermoplastique avec une extrudeuse qui présente un châssis (1) pouvant être chauffé ainsi qu'une vis (2), qui présente une zone d'introduction, une zone de fusion, une zone d'évacuation ainsi qu'un trou (9) s'étendant de la zone d'introduction jusqu'à la zone d'évacuation, dans lequel peut être introduit un agent de thermorégulation, **caractérisé par** les caractéristiques suivantes :
a) le thermoplastique à extruder est un mélange d'un granulat, de grains et d'une poudre d'un premier thermoplastique et d'un deuxième thermoplastique, la plage de fusion du premier thermoplastique étant différente de la plage de fusion du deuxième thermoplastique,
b) l'agent de thermorégulation provoque un chauffage de la vis (2) dans la zone d'introduction à une température inférieure à la plage de fusion du thermoplastique présentant la plage de fusion basse et
c) l'agent de thermorégulation provoque une régulation de la température de la vis (2) dans la zone d'évacuation (9a) qui est située entre la plage de fusion du premier et du deuxième thermoplastique.

2. Procédé selon la revendication 1, **caractérisé en ce que** le premier thermoplastique est un homopolymère de polyéthylène et le deuxième thermoplastique un copolymère d'éthylène.

3. Procédé selon la revendication 1 ou 2, **caractérisé en ce que** la vis (2) est chauffée dans la zone d'introduction à une température entre 20 et 60°C.

4. Procédé selon l'une quelconque des revendications 1 à 3, **caractérisé en ce que** la vis (2) est maintenue au niveau de la zone d'évacuation (9a) à une température de 95 à 110°C.

5. Procédé selon l'une quelconque des revendications 1 à 4, **caractérisé en ce qu'**un mélange, constitué de 70 à 90% en poids d'homopolymère de polyéthylène et 30 à 10% en poids de copolymère d'éthylène est mélangé, fondu et extrudé dans l'extrudeuse.

6. Procédé selon l'une quelconque des revendications 1 à 5, **caractérisé en ce qu'**on utilise un copolymère d'éthylène dont la proportion de comonomère est située entre 8 et 35%.

7. Procédé selon l'une quelconque des revendications 1 à 6, **caractérisé en ce qu'**on utilise comme copolymère d'éthylène un copolymère d'éthylène-acrylate de butyle, d'éthylène-acrylate d'éthyle ou d'éthylène-acrylate de méthyle, présentant à chaque fois une teneur en monomère acrylate de 8 à 35% en poids.

8. Procédé selon l'une quelconque des revendications 1 à 7, **caractérisé en ce que** les deux thermoplastiques sont introduits dans l'extrudeuse sous forme d'un granulat.

9. Procédé selon l'une quelconque des revendications 1 à 8, **caractérisé en ce que** le trou (9) de la vis (2) est séparé en deux chambres (9a, 9b), la première chambre (9b) s'étendant de la zone d'introduction jusqu'au premier tiers de la zone de fusion et la deuxième chambre (9a) s'étendant jusqu'à la zone d'évacuation.

10. Procédé selon l'une quelconque des revendications 1 à 9, **caractérisé en ce que** l'agent de thermorégulation pour la première chambre (9b) est thermorégulé dans un premier appareil de thermorégulation et l'agent de thermorégulation pour la deuxième chambre (9a) est thermorégulé dans un deuxième appareil de thermorégulation à une température pouvant être prédéfinie.

11. Procédé selon l'une quelconque des revendications 1 à 10, **caractérisé en ce que** le mélange de polymères contient une proportion de peroxyde de 1 à 3% en poids.
